# EUROPÄISCHE PATENTSCHRIFT

(11) **EP 0 707 009 B1**
(45) Veröffentlichungstag und Bekanntmachung des Hinweises auf die Patenterteilung: **13.06.2001**
(21) Anmeldenummer: 95112074.0
(22) Anmeldetag: 01.08.1995
(51) Int. Cl.: C07F 7/18

(54) **Verfahren zur Herstellung von 3-Acryloxypropylalkoxysilanen**
Process for the preparation of 3-acryloxypropyl alkoxysilanes
Procédé de préparation de 3-acryloxypropylalkoxysilanes

(30) Priorität: 24.09.1994 DE 4434200
(43) Veröffentlichungstag der Anmeldung: 17.04.1996
(73) Patentinhaber: Degussa AG, 40474 Düsseldorf (DE)
(72) Erfinder: Monkiewicz, Jaroslaw, Dr., D-79618 Rheinfelden (DE); Frings, Albert, Dr., D-79618 Rheinfelden (DE); Horn, Michael, Dr., D-79618 Rheinfelden (DE); Jenkner, Peter, Dr., D-79618 Rheinfelden (DE); Kötzsch, Hans-Joachim, Dr., D-79618 Rheinfelden (DE); Kropfgans, Frank, Dr., D-79618 Rheinfelden (DE); Seiler, Claus-Dietrich, Dr., D-79618 Rheinfelden (DE); Srebny, Hans-Günther, Dr., D-48249 Dülmen-Rorup (DE); Standke, Burkhard, Dr., D-79540 Lörrach (DE)

(56) Entgegenhaltungen:
- EP-A- 0 247 501
- EP-A- 0 472 438
- EP-A- 0 562 584
- US-A- 4 709 067
- US-A- 5 103 032
- CHEMICAL ABSTRACTS, vol. 84, no. 23, 7.Juni 1976 Columbus, Ohio, US; abstract no. 165010a, TAKAMIZAWA, M. ET AL. 'organosilicon compounds' & JP-A-07 524 947 (SHIN-ETSU CHEMICAL INDUSTRY CO., LTD.)
- CHEMICAL ABSTRACTS, vol. 114, no. 7, 18.Februar 1991 Columbus, Ohio, US; abstract no. 62165p, MARCINIEC, B. ET AL. 'CATALYSIS OF HYDROSILYLATION. PART XVIII. PT(PPH3)2(CH2=CH2) - A VERSATILE CATALYST FOR HYDROSLYLATION OF OLEFINS' & APPL. ORGANOMET. CHEM., Bd. 4, Nr. 1, 1990 Seiten 27-34,
- CHEMICAL ABSTRACTS, vol. 119, no. 17, 25.Oktober 1993 Columbus, Ohio, US; abstract no. 181012z, MARCINIEC, B. ET AL. 'PREPARATION OF (3-(METHACRYLOXY)PROPYL)SILANES' & PL-A-158 567

## Beschreibung

Die Erfindung betrifft ein Verfahren zur Herstellung von 3-Acryloxypropylalkoxysilanen der allgemeinen Formel I

CH₂=C(R)C(O)O(CH₂)₃Si(R¹)ₐ(OR²)₃₋ₐ (I)

durch Umsetzung eines Hydrogensilans der allgemeinen Formel II

HSi(R¹)ₐ(OR²)₃₋ₐ (II)

mit einem Allylester der allgemeinen Formel III

CH₂=C(R)C(O)OCH₂CH=CH₂ (III),

wobei R ein Wasserstoffatom oder eine Methylgruppe, R¹ und R² C₁- bis C₆-Alkylgruppen oder Phenylgruppen sein können und a gleich 0 oder 1 oder 2 ist, in Gegenwart eines Platinkatalysators.

3-Acryloxypropylalkoxysilane, insbesondere die 3-Methacryloxypropylalkoxysilane, gehören zu den organischen Silanen, die in großem Maßstab industriell Anwendung finden. Da deren Struktur sowohl eine hydrolyseempfindliche Alkoxysilylgruppe, die mit anorganischen Materialien eine stabile Bindung eingehen kann, als auch eine gegenüber den organischen Reaktanden aktive Doppelbindung aufweist, bieten die 3-Acryloxypropylalkoxysilane vielfältige Einsatzmöglichkeiten, z. B. als Haftvermittler. Das 3-Methacryloxypropyltrimethoxysilan wird häufig auch zur Modifizierung von Oberflächen in der Glasfaserindustrie verwendet.

Es ist bekannt, daß verschiedene Platinverbindungen für eine direkte Umsetzung der Hydrogensilane mit den Allylestern der Acryl- und Methacrylsäure als Katalysatoren eingesetzt werden können. Das industriell am häufigsten für diese Hydrosilylierungsreaktion eingesetzte, homogene Katalysatorsystem ist Hexachloroplatinsäure in Aceton oder Isopropanol. Die Anwendung dieser stark chlorhaltigen Platin(IV)-Verbindung für die Herstellung von 3-Methacryloxy- bzw. 3-Acryloxypropylalkoxysilanen wird in EP-A 0 277 023, EP-PS 0 247 501 und EP-A 0 472 438 beschrieben.

EP-PS 0 247 501 lehrt mehrere Platin(II)-Komplexe als weitere Möglichkeiten zur Hexachloroplatinsäure als Katalysator: Dichlorobis(acetonitril)platin(II), Dichlorobis(ethylen)platin(II), cis-Dichlorobis(triphenylphosphino)platin(II) und ein Platin(0)-Komplex - Tetrakis(triphenylphosphino)platin(0).

Ein weiterer chlorhaltiger Platin(II)-Katalysator- Dichloro(1,5-cyclooctadien)-platin(II) - und ein anderer Platin(0)-Katalysator - 1,3-Divinyltetramethyldisiloxan/Platin-Komplex in Toluol - sind in der EP-A 0 472 438 für die direkte Umsetzung von Allylmethacrylaten mit Trialkoxysilanen offenbart.

Die in dem zuvor genannten Stand der Technik angegebenen Ausbeuten für die Herstellung von 3-Acryloxy- bzw. Methacryloxypropylalkoxysilanen liegen unter Verwendung der genannten chlorhaltigen Platinkatalysatoren und unter Berücksichtigung der jeweiligen Reaktionsführung im Bereich von 75 bis 88 %. Die Verfahren gemäß dem Stand der Technik erfordern eine aufwendige Aufarbeitung des entstandenen Rohproduktes.

Darüber hinaus ist die Verwendung der Katalysatoren nach dem Stand der Technik aufgrund ihres hohen Chlor-Anteils, der durchaus 50 Gew.-% und mehr ihres Molekulargewichts ausmachen kann, als umweltrelevant einzustufen.

Diese chlorhaltigen Katalysatorsysteme müssen außerdem als sehr verdünnte Lösungen in Aceton oder Isopropanol eingesetzt werden.

Darüber hinaus ist bekannt [Chemical Abstracts (1993) - CA 119: 181012z], ein 3-Methacryloxypropylsilan durch Umsetzen eines Hydrogensilans mit Allylmethacrylat in Gegenwart eines Platin(0)komplexkatalysators sowie in Gegenwart eines Polymerisationsinhibitors herzustellen, wobei Ausbeuten von 93 bis 98 % offenbart sind.

Aus CA 114:62165p [Chemical Abstracts (1991)] ist die Hydrosilylierung von Alkenen in Gegenwart eines Platin(0)-haltigen Triphenylphosphin-Komplexkatalysators zu entnehmen.

Ferner offenbart CA 84:165010a [Chemical Abstracts (1976)] die Hydrosilylierung von Alkenen in Gegenwart eines Platin(II)-haltigen Acetylaceton-Komplexkatalysators und in Gegenwart eines Polymerisationsinhibitors sowie unter Zusatz eines Lösmittels durchzuführen.

Ein großes Problem stellt bei allen Verfahren gemäß dem Stand der Technik die unerwünschte Polymerisationsneigung der Endprodukte dar. Nach der Lehre der EP-A 0 472 438 kann die Polymerisationsneigung durch Zusatz von sterisch gehinderten Phenolen, Aminen, Amiden und Aminophenolen zur Reaktionsmischung verhindert werden. Meistens werden die auf dem Markt erhältlichen Polymerisationsinhibitoren in Mengen von 1 bis 5 000 Äquivalenten des Platinkatalysators eingesetzt. Ferner ist durch kontinuierliches Einleiten eines molekularen Sauerstoff enthaltenden Gases zusätzlich eine Unterdrückung der Polymerisation erzielbar. Solch ein Gasgemisch enthält rund 0,1 bis 20 Vol% Sauerstoff.

Aus der Literatur ist bekannt, daß die meisten Hydrosilylierungsreaktionen über eine katalytisch aktive Spezies mit Platin in den Oxidationsstufen (II) und (IV) ablaufen. Auch das Tetrakis(triphenylphosphin)platin(0) hat aufgrund seiner Instabilität gegenüber Sauerstoff, die eine längere Induktionszeit bei der Hydrosilylierung zur Folge hat sowie aufgrund seiner deutlich geringeren Aktivität und Chemoselektivität bei der Umsetzung von Allylverbindungen mit Hydrogensilanen keine große wirtschaftliche Bedeutung erlangt.

Der in der EP-A 0 472 438 offenbarte chlorfreie Katalysator - 1,3-Di-vinyltetramethylsilan/Platin-Komplex, dieser enthält Platin in der Oxidationsstufe (0) - ist ebenfalls nur als verdünnte Lösung einsetzbar und darüber hinaus nur eine begrenzte Zeit stabil. Seine Aktivität und Selektivität bezüglich Allyl- und Acrylverbindungen ist ferner für industrielle Zwecke nicht ausreichend.

Der Erfindung liegt daher die Aufgabe zugrunde, ein umweltschonendes und gleichzeitig wirtschaftliches Verfahren zur Herstellung von 3-Acryloxypropylalkoxysilanen der allgemeinen Formel I bereitzustellen.

Überraschenderweise wurde nun gefunden, daß durch die Umsetzung eines Hydrogensilans II mit einem Allylester III in Gegenwart eines halogenfreien Platinkatalysators mit Platin in der Oxidationsstufe + 2 3-Acryloxypropylalkoxysilane besonders wirtschaftlich und besonders umweltverträglich herzustellen sind, wenn die Umsetzung lösemittelfrei und in Gegenwart von Polymerisationsinhibitoren durchgeführt wird und man als Polymerisationsinhibitor ein sterisch gehindertes Phenol und/oder ein während der Umsetzung in die Reaktionsmischung eingeleitetes sauerstoffhaltiges Gas einsetzt.

Darüber hinaus ist beispielsweise der im erfindungsgemäßen Herstellverfahren eingesetzte Bis(acetylacetonato)platin(II)-Komplex als chlorfreier Katalysator auch im technischen Maßstab einfach zugänglich und kann zusätzlich für eine längere Zeit ohne Aktivitätsverlust aufbewahrt werden.

Gegenstand der vorliegenden Erfindung ist daher ein Verfahren zur Herstellung von 3-Acryloxypropylalkoxysilanen der allgemeinen Formel I

CH₂=C(R)C(O)O(CH₂)₃Si(R¹)ₐ(OR²)₃₋ₐ (I)

durch Umsetzen eines Hydrogensilans der allgemeinen Formel II

HSi(R¹)ₐ(OR²)₃₋ₐ (II)

mit einem Allylester der allgemeinen Formel III

CH₂=C(R)C(O)OCH₂CH=CH₂ (III),

wobei R ein Wasserstoffatom oder eine Methylgruppe, R¹ und R² C₁- bis C₆-Alkylgruppen oder Phenylgruppen sein können und a gleich 0 oder 1 oder 2 ist, in Gegenwart eines halogenfreien Platinkatalysators mit Platin in der Oxidationsstufe + 2, die Umsetzung lösemittelfrei und in Gegenwart von Polmerisationsinhibitoren durchgeführt wird und man als Polymerisationsinhibitor ein sterisch gehindertes Phenol und/oder ein während der Umetzung in die Reaktionsmischung eingeleitetes sauerstoffhaltiges Gas einsetzt.

Für das erfindungsgemäße Verfahren werden als halogenfreie Platinkatalysatoren mit der Oxidationsstufe + 2 bevorzugt Platin(II)-cyanid, Bis(phthalocyanito)-platin(II), Bis(trialkylphosphin)platin(II)-oxalat, Tetraamminplatin(II)-nitrat, Bis(acetylacetonato)triphenylphosphanplatin(II), Bis(acetonato)bis(triphenyl-phosphan)platin(II), Bis(acetylacetonato)trialkylphosphanplatin(II), Bis(acetonato)bis(trialkylphosphan)platin(II), Bis(acetylacetonato)pyridinplatin(II), Bis(acetonato)bis(pyridin)platin(II), Kaliumtetracyanoplatinat(II), Bis(triphenylphosphino)bis(phenyl)platin(II), Bis(triphenylphosphino)bis(alkyl)platin(II), Dimethyl(1.5-Cyclooctadien)platin(II) oder Bis(acetylacetonato)platin(II) oder deren Mischungen eingesetzt. Besonders bevorzugt wird als halogenfreier Platinkatalysator Bis(acetylacetonato)platin(II) eingesetzt. Der halogenfreie Platinkatalysator mit Platin in der Oxidationsstufe + 2 kann, insbesondere das Bis(acetylacetonato)platin(II), sowohl ohne als auch in Gegenwart von Phosphor-und/oder Stickstoff-haltigen Liganden eingesetzt werden. Geeignete Phosphor-bzw. Stickstoff-haltige Liganden sind z. B. Triphenylphosphin, Triethylamin und Ethylendiamin.

Besonders umweltverträglich ist die lösemittelfreie Verfahrensvariante.

Die bei der Umsetzung angewandte Platinkonzentration beträgt, bezogen auf die Menge der Einsatzstoffe, bevorzugt 5 bis 500 Gew.-ppm, besonders bevorzugt 10 bis 200 Gew.-ppm und ganz besonders bevorzugt 20 bis 100 Gew.-ppm.

Eine Steigerung der Katalysatorkonzentration bewirkt im allgemeinen eine Verringerung der Reaktionszeit. Je nach Platinkonzentration beträgt die Reaktionszeit im erfindungsgemäßen Verfahren zwischen 15 Minuten und 24 Stunden.

Im erfindungsgemäßen Verfahren kann die Umsetzung auch in Gegenwart von Polymerisationsinhibitoren durchgeführt werden. Als Polymerisationsinhibitor kann ein sterisch gehindertes Phenol und/oder ein während der Umsetzung in die Reaktionsmischung eingeleitetes sauerstoffhaltiges Gas eingesetzt werden. Vorzugsweise wird als Polymerisationsinhibitor 2,6-Ditertiärbutylphenol eingesetzt. Ein sauerstoffhaltiges Gas, wie z. B. Luft oder eine aus Sicherheitsgründen bevorzugte Stickstoff/Luft-Mischung, das in die Reaktionsmischung einleitbar ist, unterdrückt im allgemeinen die Produktpolymerisation zusätzlich.

Für eine effektive Reduzierung der unerwünschten Polymerbildung beträgt die bei der Umsetzung angewandte Polymerisationsinhibitor-Konzentration, bezogen auf die Menge der Einsatzstoffe, vorzugsweise 0,25 bis 3,00 Mol-%, besonders vorzugsweise 0,8 bis 1,0 Mol-%.

Das erfindungsgemäße Verfahren ist sowohl kontinuierlich als auch diskontinuierlich durchführbar. Vorzugsweise wird die Umsetzung bei Temperaturen von 60 bis 130 °C, besonders vorzugsweise bei Temperaturen von 70 bis 110 °C, durchgeführt. Die Durchführung der diskontinuierlichen Verfahrensweise kann auf unterschiedliche Art und Weise erfolgen: So zum Beispiel, indem der Katalysator mit dem Inhibitor in einem Allylester vorgelegt und das Hydrogensilan in den Reaktor zugegeben wird, oder indem man auch die beiden Reaktanden mit dem Katalysator und dem Inhibitor gleichzeitig in den Reaktor dosiert und auf die gewünschte Reaktiontemperatur bringt. Es besteht auch die Möglichkeit, das Hydrogensilan vorzulegen und den Allylester in den Reaktor zuzugeben.

Als Hydrogensilane können unterschiedlich substituierte Silane, die mindestens eine H-Si-Gruppierung in ihrer Struktur aufweisen, im erfindungsgemäßen Verfahren eingesetzt werden. Vorzugsweise wird als Hydrogensilan ein Trialkoxysilan, besonders vorzugsweise als Hydrogensilan das Trimethoxysilan, das Triethoxysilan, das Dimethoxymethylsilan, das Diethoxymethylsilan, das Ethoxydimethylsilan oder das Methoxydimethylsilan eingesetzt. Vorzugsweise wird als Allylester der Methacrylsäureallylester eingesetzt.

Die durch das erfindungsgemäße Verfahren erzielbaren Vorteile resultieren daher, daß anstelle der weniger effizienten und umweltrelevanten, chlorhaltigen Platinkatalysatoren erfindungsgemäß ein halogenfreier, umweltfreundlicher Platinkatalysator mit Platin in der Oxidationsstufe + 2 eingesetzt wird: Somit wird eine drastische Reduzierung des Halogengehaltes im Endprodukt erzielt, die Korrosionsgefahren in der Produktionsanlage werden minimiert, was zu einer Umweltentlastung beiträgt. Darüber hinaus ermöglicht das erfindungsgemäße Verfahren eine wirtschaftliche Betriebsweise. Dabei ist das im erfindungsgemäßen Verfahren eingesetzte Katalysatorsystem auch über einen längeren Zeitraum stabil. Besonders umweltverträglich ist eine lösemittelfreie Verfahrensvariante. Die chlorfreien, erfindungsgemäß eingesetzten Platin(II)komplexkatalysatoren bewirken bei der Reaktion eine hohe Chemoselektivität und hohe Umsatzraten. Die bei dem erfindungsgemäßen Verfahren erzielte hohe Reinheit des Rohproduktes ermöglicht es, das 3-Acryloxypropylalkoxysilan mit relativ geringem Destillationsaufwand zu gewinnen.

Durch die nachfolgenden Beispiele wird die vorliegende Erfindung näher erläutert:

### Beispiel 1

In einem 100 ml Dreihalskolben, versehen mit Magnetrührer, Kühler, Thermometer und Tropftrichter werden 17,9 g (0,146 mol) Trimethoxysilan (TMOS), 1,2 mg Platin(II)acetylacetonat (1,0 ml Lösung in TMOS, ca. 15 ppm Pt bezogen auf die Edukte) und 580 mg 2,6-Ditertiärbutylphenol vorgelegt. Der Kolbeninhalt wird unter Rühren auf ca. 90 °C erwärmt, und bei dieser Temperatur werden 18,3 g (0,143 mol) Methacrylsäureallylester so schnell zugetropft, daß die Temperatur 95 °C nicht überschreitet. Nach der Esterzugabe wird die Reaktionsmischung noch ca. 5 Stunden bei 90 °C gerührt. Während der Reaktion wird die Luft in das Reaktionsgemisch über eine Glaskapillare eingeleitet. Der mit Hilfe eines Gaschromatographen bestimmte Umsatz beträgt ca. 96 % für Allylester und über 99 % für TMOS. Die Selektivität des 3-Methacryloxypropyltrimethoxysilans liegt bei 88 %.

### Beispiel 2

In einem 100 ml Dreihalskolben, versehen mit Magnetrührer, Kühler, Thermometer und Tropftrichter werden 18,87 g (0,15 mol) Trimethoxysilan (TMOS), 5,8 mg Platin(ll)acetylacetonat (ca. 75 ppm Pt bezogen auf die Edukte), 4,0 mg Triphenylphosphan (Pt/P = 1/1) und 580 mg 2,6-Ditertiärbutylphenol vorgelegt. Der Kolbeninhalt wird unter Rühren auf ca. 80 °C erwärmt und 18,33 g (0,143 mol) Methacrylsäureallylester so schnell zugetropft, daß die Temperatur nicht über 90 °C ansteigt. Nach der Esterzugabe wird die Reaktionsmischung noch ca. 4 Stunden bei 90 °C gerührt. Während der Reaktion wird Luft in das Reaktionsgemisch über eine Glaskapillare eingeleitet. Der nach dem Gaschromatogramm berechnete Umsatz beträgt ca. 97 % für Allylester und über 99 % für TMOS. Die Selektivität des 3-Methacryloxypropyltrimethoxysilans liegt bei 87 %.

### Beispiel 3

Es wird verfahren wie im Beispiel 2 beschrieben. Anstelle von Triphenylphosphin werden 11 µl Triethylamin eingesetzt. Der nach dem Gaschromatogramm berechnete Umsatz beträgt ca. 98 % für Allylester und über 99 % für TMOS. Die Selektivität des 3-Methacryloxypropyltrimethoxysilans liegt bei 87 %.

### Beispiel 4

In einem 100 ml Dreihalskolben, versehen mit Magnetrührer, Kühler, Thermometer und Tropftrichter werden 22,8 g (0,139 mol) Triethoxysilan (TEOS), 3,0 mg Platin(II)acetylacetonat (2 ml Lösung in TEOS, ca. 30 ppm Pt, bezogen auf die Edukte) und 570 mg 2,6-Ditertiärbutylphenol vorgelegt. Der Kolbeninhalt wird unter Rühren auf ca. 100 °C erwärmt und 18,3 g (0,143 mol) Methacrylsäureallylester so schnell zugetropft, daß die Temperatur 110 °C nicht überschreitet. Nach der Esterzugabe wird die Reaktionsmischung noch ca. 4 Stunden bei 100 °C gerührt. Während der Reaktion wird Luft in das Reaktionsgemisch über eine Glaskapillare eingeleitet. Der nach dem Gaschromatogramm berechnete Umsatz beträgt ca. 94 % für Allylester und über 99 % für TEOS. Die Selektivität des 3-Methacryloxypropyltriethoxysilans liegt bei 85 %.

### Beispiel 5

In einem 100 ml Dreihalskolben, versehen mit Magnetrührer, Kühler, Thermometer und Tropftrichter werden 20,43 g (0,15 mol) Methyldiethoxysilan, 6,2 mg Platin(II)acetylacetonat (ca. 75 ppm Pt bezogen auf die Edukte) und 590 mg 2,6-Ditertiärbutylphenol vorgelegt. Der Kolbeninhalt wird unter Rühren auf ca. 100 °C erwärmt 18,33 g (0,143 mol) Methacrylsäureallyllester so schnell zugetropft, daß die Temperatur 110 °C nicht überschreitet. Nach der Esterzugabe wird die Reaktionsmischung noch ca. 2 Stunden bei 100 °C gerührt. Während der Reaktion wird Luft in das Reaktionsgemisch über eine Glaskapillare eingeleitet. Der nach dem Gaschromatogramm berechnete Umsatz beträgt ca. 94 % für Allylester und über 99 % für Methyldiethoxysilan. Die Selektivität des 3-Methacryloxypropylmethyldiethoxysilans liegt bei 80 %.

## Patentansprüche

1. Verfahren zur Herstellung von 3-Acryloxypropylalkoxysilanen der allgemeinen Formel I
CH₂=C(R)C(O)O(CH₂)₃Si(R¹)ₐ(OR²)₃₋ₐ (I)
durch Umsetzen eines Hydrogensilans der allgemeinen Formel II
HSi(R¹)ₐ(OR²)₃₋ₐ (II)
mit einem Allylester der allgemeinen Formel III
CH₂=C(R)C(O)OCH₂CH=CH₂ (III),
wobei R ein Wasserstoffatom oder eine Methylgruppe, R¹ und R² C₁- bis C₆-Alkylgruppen oder Phenylgruppen sein können und a gleich 0 oder 1 oder 2 ist,
in Gegenwart eines halogenfreien Platinkatalysators mit Platin in der Oxidationsstufe + 2, die Umsetzung lösemittelfrei und in Gegenwart von Polmerisationsinhibitoren durchgeführt wird und man als Polymerisationsinhibitor ein sterisch gehindertes Phenol und/oder ein während der Umsetzung in die Reaktionsmischung eingeleitetes sauerstoffhaltiges Gas einsetzt.

2. Verfahren Anspruch 1,
dadurch gekennzeichnet,
daß als halogenfreier Platinkatalysator Platin(II)-cyanid, Bis(phthalocyanito)-platin(II), Bis(trialkylphosphin)platin(II)-oxalat, Tetraamminplatin(II)-nitrat, Bis(acetylacetonato)triphenylphosphanplatin(II), Bis(acetonato)bis(triphenyl-phosphan)platin(II), Bis(acetylacetonato)trialkylphosphanplatin(II), Bis(acetonato)bis(trialkylphosphan)platin(II), Bis(acetylacetonato)pyridinplatin(II), Bis(acetonato)bis(pyridin)platin(II), Kaliumtetracyano-platinat(II), Bis(triphenylphosphino)bis(phenyl)platin(II), Bis(triphenylphosphino)bis(alkyl)platin(II), Dimethyl(1.5-cyclooctadien)platin(II) oder Bis(acetylacetonato)platin(II) oder deren Mischungen eingesetzt wird.

3. Verfahren nach Anspruch 1 oder 2,
dadurch gekennzeichnet,
daß der halogenfreie Platinkatalysator mit Platin in der Oxidationsstufe + 2 in Gegenwart von Phosphor- und/oder Stickstoff-haltigen Liganden eingesetzt wird.

4. Verfahren nach den Ansprüchen 1 bis 3,
dadurch gekennzeichnet,
daß die bei der Umsetzung angewandte Platinkonzentration, bezogen auf die Menge der Einsatzstoffe, 5 bis 500 Gew.-ppm beträgt.

5. Verfahren nach Anspruch 4,
dadurch gekennzeichnet,
daß die bei der Umsetzung angewandte Platinkonzentration, bezogen auf die Menge der Einsatzstoffe, 10 bis 200 Gew.-ppm beträgt.

6. Verfahren nach Anspruch 5,
dadurch gekennzeichnet,
daß die bei der Umsetzung angewandte Platinkonzentration, bezogen auf die Menge der Einsatzstoffe, 20 bis 100 Gew.-ppm beträgt.

7. Verfahren nach den Ansprüchen 1 bis 6,
dadurch gekennzeichnet,
daß als Polymerisationsinhibitor 2,6-Ditertiärbutylphenol eingesetzt wird.

8. Verfahren nach den Ansprüchen 1 bis 7,
dadurch gekennzeichnet,
daß die bei der Umsetzung angewandte Polymerisationsinhibitor-Konzentration, bezogen auf die Menge der Einsatzstoffe, 0,25 bis 3,00 Mol% beträgt.

9. Verfahren nach Anspruch 8,
dadurch gekennzeichnet,
daß die bei der Umsetzung angewandte Polymerisationsinhibitor-Konzentration, bezogen auf die Menge der Einsatzstoffe, 0,8 bis 1,0 Mol-% beträgt.

10. Verfahren nach den Ansprüchen 1 bis 9,
dadurch gekennzeichnet, daß die Umsetzung bei Temperaturen von 60 bis 130 °C durchgeführt wird.

11. Verfahren nach Anspruch 10,
dadurch gekennzeichnet, daß die Umsetzung bei Temperaturen von 70 bis 110 °C durchgeführt wird.

12. Verfahren nach den Ansprüchen 1 bis 11,
dadurch gekennzeichnet,
daß als Hydrogensilan ein Trialkoxysilan eingesetzt wird.

13. Verfahren nach den Ansprüchen 1 bis 12,
dadurch gekennzeichnet,
daß als Hydrogensilan das Trimethoxysilan, das Triethoxysilan, das Dimethoxymethylsilan, das Diethoxymethylsilan, das Ethoxydimethylsilan oder das Methoxydimethylsilan eingesetzt wird.

14. Verfahren nach den Ansprüchen 1 bis 13,
dadurch gekennzeichnet,
daß als Allylester der Methacrylsäureallylester eingesetzt wird.

## Claims

1. A process for the preparation of a 3-acryloyloxypropylalkoxysilane: of the general formula I
CH₂=C(R)C(O)O(CH₂)₃Si(R¹)ₐ(OR²)₃₋ₐ (I)
by reaction of a hydrosilane of the general formula II
HSi(R¹)ₐ(OR²)₃₋ₐ (II)
with an allyl ester of the general formula III
CH₂=C(R)C(O)OCH₂CH=CH₂ (III),
where R may be a hydrogen atom or a methyl group, R¹ and R² may be C₁ to C₆ alkyl groups or phenyl groups, and a is 0 or 1 or 2, in the presence of a halogen-free platinum catalyst containing platinum in oxidation state + 2, characterized in that the reaction is carried out without solvent and in the presence of polymerization inhibitor , and a sterically hindered phenol and/or an oxygen-containing gas which is passed into the reaction mixture during the reaction are or is employed as polymerization inhibitor.

2. A process according to claim 1, characterized in that the halogen-free platinum catalyst employed is platinum(II) cyanide, bis(phthalocyanito)-platinum(II), bis(trialkylphosphine)platinum(II) oxalate, tetraammineplatinum(II) nitrate, bis(acetylacetonato)triphenylphosphineplatinum(II), bis(acetonato)bis(triphenylphosphine)platinum(II), bis(acetylacetonato)trialkylphosphineplatinum(II), bis(acetonato)bis(trialkylphosphine)platinum(II), bis(acetylacetonato)pyridineplatinum(II), bis(acetonato)bis(pyridine)platinum(II), potassium tetracyanoplatinate(II), bis(triphenylphosphino)-bis(phenyl)platinum(II), bis(triphenylphosphino)-bis(alkyl)platinum(II), dimethyl(1,5-cyclo-octadiene)platinum(II) or bis(acetylacetonato)-platinum(II) or mixtures thereof.

3. A process according to claim 1 or 2, characterized in that the halogen-free platinum catalyst containing platinum in oxidation state + 2 is employed in the presence of phosphorus- and/or nitrogen-containing ligands.

4. A process according to any of claims 1 to 3, characterized in that the concentration of platinum employed in the reaction, based on the quantity of starting materials, is from 5 to 500 ppm by weight.

5. A process according to claim 4, characterized in that the concentration of platinum employed in the reaction, based on the quantity of starting materials, is from 10 to 200 ppm by weight.

6. A process according to claim 5, characterized in that the concentration of platinum employed in the reaction, based on the quantity of starting materials, is from 20 to 100 ppm by weight.

7. A process according to any of claims 1 to 6, characterized in that 2,6-di-tert-butylphenol is employed as polymerization inhibitor.

8. A process according to any of claims 1 to 7, characterized in that the concentration of polymerization inhibitor employed in the reaction, based on the quantity of starting materials, is from 0.25 to 3.00 mol%.

9. A process according to claim 8, characterized in that the concentration of polymerization inhibitor employed in the reaction, based on the quantity of starting materials, is from 0.8 to 1.0 mol%.

10. A process according to any of claims 1 to 9, characterized in that the reaction is carried out at temperatures of from 60 to 130°C.

11. A process according to claim 10, characterized in that the reaction is carried out at temperatures of from 70 to 110°C.

12. A process according to any of claims 1 to 11, characterized in that a trialkoxysilane is employed as hydrosilane.

13. A process according to any of claims 1 to 12, characterized in that trimethoxysilane, triethoxysilane, dimethoxymethylsilane, diethoxymethylsilane, ethoxydimethylsilane or methoxydimethylsilane is employed as hydrosilane.

14. A process according to any of claims 1 to 13, characterized in that allyl methacrylate is employed as allyl ester.

## Revendications

1. Procédé de préparation de 3-acryloxypropylalkoxysilanes de formule générale I
CH₂=C(R)C(O)O(CH₂)₃Si(R¹)ₐ(OR²)₃₋ₐ (I)
par mise en réaction d'un hydrogenosilane de formule générale (II)
HSi(R¹)ₐ(OR²)₃₋ₐ (II)
avec un ester d'allyle de formule générale (III)
CH₂=C(R)C(O)OCH₂CH=CH₂ (III)
dans laquelle R est un hydrogène ou un groupe méthyle, R¹ et R² peuvent être des groupes alkyle en C₁ à C₆ ou des groupes phényle et a est égal à 0 ou 1 ou 2,
en présence d'un catalyseur au platine exempt d'halogène, avec du platine au degré d'oxydation + 2, on effectue la réaction sans solvant et en
présence d'Inhibiteurs de polymérisation et on met en oeuvre comme inhibiteur de polymérisation un phénol stériquement empéché et/ou un gaz oxygéné introduit pendant la réaction dans le mélange réactionnel.

2. Procédé selon la revendication 1,
caractérisé en ce que
comme catalyseur au platine exempt d'halogène on met en oeuvre du cyanure de platine(II), du bis(phthalocyanito)-platine(II), du bis(trialkylphosphin)platine(II)-oxalate, du tétraamminplatine(II)-nitrate, du bis(acétylacétonato)triphénylphosphanplatine(II), du bis(acétanoto)bis(triphénylphosphan)platine(II). du bis(acétylacétonato)trialkylphosphanplatine(II), du bis(acétonato)bis(trialkylphosphan)platine(II), du bis(acétylacétonato)-pyridinplatine(II), du bis(acétonato)bis(pyridin)platine(II), du potassium tetracyanoplatinate(II), du bis(triphénylphosphino)bis(phenyl)platine(II), du bis(triphénylphosphino)bis(alkyl)-platine(II), du diméthyl(1,5-cyclooctadien)platine(II), du bis(acétylacétonato)platine(II) ou leurs mélanges.

3. Procédé selon la revendication 1 ou la revendication 2,
caractérisé en ce que
le catalyseur au platine dépourvu d'halogène est mis en oeuvre avec du platine au degré d'oxydation + 2 en présence de ligands contenant du phosphore et/ou de l'azote.

4. Procédé selon les revendications 1 à 3,
caractérisé en ce que
la concentration en platine utilisée pour 1a réaction, rapportée à la quantité de substances ajoutées s'élève de 5 à 500 ppm en poids.

5. Procédé selon la revendication 4,
caractérisé en ce que
la concentration en platine utilisée pour la réaction, rapportée à la quantité de substances ajoutées s'élève de 10 à 200 ppm en poids.

6. Procédé selon la revendication 5,
caractérisé en ce que
la concentration en platine utilisée pour la réaction, rapportée à la quantité de substances ajoutées, s'élève de 20 à 100 ppm en poids.

7. Procédé selon Tune quelconque des revendications 1 à 6,
caractérisé en ce que
comme inhibiteur de polymérisation on utilise le 2,6-diterbutylphénol.

8. Procédé selon l'une quelconque des revendications 1 à 7,
caractérisé en ce que
la concentration en inhibiteur de polymérisation utilisée pour la réaction, rapportée à la quantité de substances ajoutées, s'élève de 0,25 à 3,00 % molaire.

9. Procédé selon la revendication 8,
caractérisé en ce que
la concentration en inhibiteur de polymérisation utilisée pour la réaction, rapportée à la quantité de substances ajoutées, s'élève de 0,8 à 1,0 % molaire.

10. Procédé selon l'une quelconque des revendications 1 à 9,
caractérisé en ce qu
on effectue la réaction à des températures allant de 60 à 130°C.

11. Procédé selon la revendication 10,
caractérisé en ce qu'
on effectue la réaction à des températures allant de 70 à 110°C.

12. Procédé selon l'une quelconque des revendications 1 à 11,
caractérisé en ce qu'
on met en oeuvre comme hydrogénosilane, un trialkoxysilane.

13. Procédé selon Tune quelconque des revendications 1 à 12,
caractérisé en ce qu'
on met en oeuvre comme hydrogénosilane le triméthoxysilane, lc triéthoxysilane, le diméthoxyméthylsilane, le diéthoxyméthylsilane, l'éthoxydiméthylsilane ou le méthoxydiméthylsilane.

14. Procédé selon l'une quelconque des revendications 1 à 13,
caractérisé en ce qu'
on met en oeuvre comme ester d'allyle, l'ester d'allyle de l'acide méthacrylique.
